# EUROPEAN PATENT SPECIFICATION

(11) **EP 4 138 200 B1**
(45) Date of publication and mention of the grant of the patent: **07.10.2026**
(21) Application number: 21813082.1
(22) Date of filing: 31.05.2021
(51) Int. Cl.: H01M 50/457, H01M 50/449, H01M 50/46, H01M 50/411, H01M 50/446, H01G 11/52, H01M 10/052, H01M 50/403, H01G 9/02, H01G 9/06, H01M 10/0525, H01M 50/414, H01M 50/42, H01M 50/426, H01M 50/429, H01M 50/434, H01M 50/417, H01M 50/443, H01M 50/451, H01M 50/489, H01M 50/491

(54) **SEPARATOR FOR ELECTROCHEMICAL DEVICE AND ELECTROCHEMICAL DEVICE COMPRISING SAME**
SEPARATOR FÜR ELEKTROCHEMISCHE VORRICHTUNG UND ELEKTROCHEMISCHE VORRICHTUNG DAMIT
SÉPARATEUR POUR DISPOSITIF ÉLECTROCHIMIQUE ET DISPOSITIF ÉLECTROCHIMIQUE COMPRENANT CELUI-CI

(30) Priority: 29.05.2020 KR 20200065375; 07.07.2020 KR 20200083387
(43) Date of publication of application: 22.02.2023
(73) Proprietor: LG Energy Solution, Ltd., Seoul 07335 (KR)
(72) Inventor: LEE, Joo-Sung, Daejeon 34122 (KR); KIM, Bong-Tae, Daejeon 34122 (KR); LEE, A-Young, Daejeon 34122 (KR); JUNG, Kil-An, Daejeon 34122 (KR)
(74) Representative: Hoffmann Eitle
(86) International application number: PCT/KR2021/006765
(87) International publication number: WO 2021/242072

(56) References cited:
- WO-A1-2020/022851
- KR-A- 20130 045 601
- KR-A- 20190 044 529
- KR-A- 20200 030 492
- KR-B1- 101 751 443
- KR-B1- 101 915 317
- US-A1- 2019 326 632

## Description

### TECHNICAL FIELD

The present application claims priority to Korean Patent Application No. 10-2020-0065375 filed in the Republic of Korea on May 29, 2020 and Korean Patent Application No. 10-2020-0083387 filed in the Republic of Korea on July 7, 2020.

The present disclosure relates to a separator for an electrochemical device and an electrochemical device comprising the same. More particularly, the present disclosure relates to a separator for an electrochemical device with high heat resistance and improved adhesive property and an electrochemical device comprising the same.

### BACKGROUND ART

Recently, there has been an increasing attention to energy storage technology day by day. As the application field of energy storage technology has been extended to mobile phones, camcorders, laptop computers, and even electric cars, there is growing demand for high energy density of electrochemical devices used as a power source of electronic devices. A lithium secondary battery is the best electrochemical device that meets the demand, and many studies are being made on lithium secondary batteries.

The lithium secondary battery includes a positive electrode, a negative electrode, an electrolyte solution and a separator, and in the fabrication and use of the lithium secondary battery, ensuring safety of the lithium secondary battery is a challenge.

In particular, the separator uses, in general, a polyolefin-based porous polymer substrate, and the polyolefin-based porous polymer substrate exhibits severe thermal shrinkage behaviors in a high temperature situation due to its material characteristics and procedural characteristics, causing a safety problem such as an internal short circuit.

Additionally, in general, an electrode assembly is formed by stacking the separator and the electrode, and electrode adhesion of the separator is insufficient due to the material characteristics of the separator, so there is a high likelihood that the electrode and the separator may be separated from each other.

To solve these problems, a method is proposed in which a porous coating layer comprising inorganic particles and a binder polymer is formed on both surfaces of the porous polymer substrate, and a mixture of binder polymers having good adhesive property with electrode is coated on the surface of the porous coating layer to form an adhesion layer.

However, according to the method, the binder polymer of the adhesion layer enters and clogs the pores of the porous coating layer, and a sufficient amount of binder polymer does not remain on the surface of the porous coating layer, failing to form the adhesion layer that is good enough to ensure the adhesive property with the electrode.

The following prior art documents disclose battery separators including a porous substrate and coating layers:
KR 2013 00456012
WO 2020/022851
KR 2020 0030492
KR 101 915 317
KR 101 751 443
KR 2019 0044529

Accordingly, there is still a high demand for the separator having high heat resistance and good adhesive property with electrode.

### DISCLOSURE

### Technical Problem

The present disclosure is directed to providing a separator for an electrochemical device with high heat resistance and improved adhesive property and an electrochemical device comprising the same.

### Technical Solution

The technical problem is solved by the appended set of claims.

### Advantageous Effects

The separator for an electrochemical device according to an embodiment of the present disclosure comprises the first porous coating layer having high heat resistance on one surface of the porous polymer substrate and the second porous coating layer having good adhesive property on the other surface of the porous polymer substrate, thereby providing high heat resistance and the improved adhesive property with electrode.

The separator for an electrochemical device according to an embodiment of the present disclosure has the average particle size of the first inorganic particles that is smaller than the average particle size of the second inorganic particles, thereby providing high heat resistance and improved adhesive property with electrode.

The separator for an electrochemical device according to an embodiment of the present disclosure may have the electrode adhesion layer on the upper surface of the first porous coating layer having high heat resistance by adjusting the average pore size of the first porous coating layer, the weight average molecular weight of the third binder polymer of the electrode adhesion layer, and/or the radius of gyration of the third binder polymer.

### BRIEF DESCRIPTION OF THE DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings.
FIG. 1 is a schematic diagram of a separator for an electrochemical device according to an embodiment of the present disclosure.
FIG. 2 is a scanning electron microscopy (SEM) image of a thin film of a first porous coating layer of a separator for an electrochemical device according to a preferred embodiment of the present disclosure.
FIG. 3 is a SEM image of a thin film of a second porous coating layer of a separator for an electrochemical device according to a preferred embodiment of the present disclosure.
1 kgf/cm² corresponds to 98,07 kPa.

### DETAILED DESCRIPTION

Hereinafter, preferred embodiments of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described herein and the elements shown in the drawings are just a most preferred embodiment of the present disclosure, and are not intended to fully describe the technical aspects of the present disclosure, so it should be understood that a variety of other equivalents and modifications could have been made thereto at the time that the application was filed.

Particular terms used in the following detailed description of the present disclosure are provided for convenience, but not intended to limit the present disclosure. In the specification, 'one surface', 'other surface', or 'upper surface' indicates positions and orientations in the corresponding drawings and is not limited thereto. These terms include the above-listed words, their derivatives and words having similar meanings.

Throughout the specification, it will be understood that when a layer is referred to as being on "one surface", "other surface" or "upper surface" of another layer, the layer may be placed in contact with a surface of the other layer, and intervening layers may be present.

The terms such as "first", "second" and the like, are used to distinguish one element from another, and each element is not limited by the terms.

A separator for an electrochemical device according to an aspect of the present disclosure comprises:
a porous polymer substrate;
a first porous coating layer disposed on one surface of the porous polymer substrate, and comprising first inorganic particles, and a first binder polymer disposed on all or part of the surface of the first inorganic particles to connect and hold the first inorganic particles together, and interstitial volume is formed between the first inorganic particles in substantial contact with each other and is a void space which forms pores;
a second porous coating layer disposed on the other surface of the porous polymer substrate, and comprising a plurality of nodes comprising second inorganic particles and a second binder polymer which coats at least part of the surface of the second inorganic particles; and a node connected part comprising at least one filament formed from the second binder polymer of the node in the shape of thread, the filament extending from the node and connecting another node, wherein the node connected part has a 3-dimensional (3D) network structure in which the plurality of filaments derived from the second binder polymer cross each other; and
an electrode adhesion layer disposed on the upper surface of the first porous coating layer, and comprising a third binder polymer.

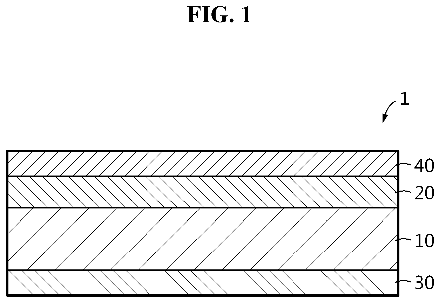

FIG. 1 is a schematic diagram of a separator for an electrochemical device according to an embodiment of the present disclosure.

Referring to FIG. 1, the separator 1 for an electrochemical device according to an embodiment of the present disclosure comprises a porous polymer substrate 10.

In an embodiment of the present disclosure, the porous polymer substrate 10 is not limited to a particular type and may include any material of separators for electrochemical devices commonly in the corresponding technical field without limitations. The porous polymer substrate may be a thin film comprising a polymer material, and non-limiting examples of the polymer material may include at least one polyolefin, polyethyleneterephthalate, polybutyleneterephthalate, polyacetal, polyamide, polycarbonate, polyimide, polyetheretherketone, polyethersulfone, polyphenyleneoxide, polyphenylenesulfide or polyethylenenaphthalene. Additionally, the porous polymer substrate may include a non-woven fabric or a porous polymer film made of the above-described polymer material or a stack of two or more of them. Specifically, the porous polymer substrate may be any one of the following a) to e):
a) a porous film formed by melting and extruding polymer,
b) a multilayer film formed by stacking the porous film of a) in two or more layers,
c) a non-woven web made of filaments obtained by melting/spinning polymer,
d) a multilayer film formed by stacking the non-woven web of b) in two or more layers,
e) a porous film of multilayer structure comprising at least two of the a) to d).

In an embodiment of the present disclosure, the thickness of the porous polymer substrate 10 may be 5 *µ*m to 50 *µ*m. The thickness range of the porous polymer substrate is not limited to the above-described range, but when the thickness is in the above-described range, it is possible to prevent the mechanical properties degradation and damage and resistance increase of the separator while the electrochemical device is in use. Meanwhile, there is no limitation on the pore size and the porosity in the porous polymer substrate, but the pore size may be 0.01 *µ*m to 50 *µ*m and the porosity may be 10% to 95%.

Referring to FIG. 1, the separator 1 for an electrochemical device according to an embodiment of the present disclosure comprises a first porous coating layer 20 comprising first inorganic particles and a first binder polymer on one surface of the porous polymer substrate 10.

The first porous coating layer 20 may be formed by coating a slurry comprising the first inorganic particles and the first binder polymer on one surface of the porous polymer substrate 10 and drying.

In the first porous coating layer 20, the first inorganic particles are held together by the first binder polymer that adheres the first inorganic particles to each other (that is, the first binder polymer connects and holds the first inorganic particles together), and the first porous coating layer 20 and the porous polymer substrate 10 are kept bonded to each other by the first binder polymer. The first inorganic particles of the first porous coating layer 20 are substantially in contact with each other in the densely packed structure, and interstitial volume formed between the first inorganic particles in contact with each other becomes the pores of the first porous coating layer 20.

The separator having the first porous coating layer 20 is good at heat resistance due to the densely packed structure of inorganic particles, but may be poor at adhesive property with electrode.

In an embodiment of the present disclosure, the first porous coating layer 20 may be an aqueous coating layer using an aqueous slurry. The aqueous slurry refers to a slurry using water as a solvent or a dispersing medium in polymer.

In a specific embodiment of the present disclosure, the first binder polymer may comprise at least one of styrene butadiene rubber, acrylic polymer, carboxymethylcellulose or polyvinyl alcohol, but is not limited thereto.

Specifically, the styrene butadiene rubber may be dispersed in a dispersing medium in the form of particles. The acrylic polymer may comprise an acrylic homopolymer composed only of acrylic monomer, or may comprise a copolymer of an acrylic monomer and another monomer. For example, the acrylic polymer may include a monomer of at least one selected from methylacrylate, ethylacrylate, butylacrylate, 2-ethylhexylacrylate, acrylic acid and methylmetacrylate. The acrylic polymer may comprise polyacrylic acid, or polyacrylate. The polyacrylic acid may be dissolved in the solvent. For example, the first binder polymer may be a mixture of acrylic copolymer and polyacrylic acid. The polyacrylic acid has high resistance and poor adhesive property, but has good heat resistant characteristics, so when polyacrylic acid is used as the first binder polymer, the separator 1 for an electrochemical device having the first porous coating layer 20 may have better heat resistance. These polymers are eco-friendly since water is used as the solvent or dispersing medium, and in forming and drying the first porous coating layer 20 on one surface of the porous polymer substrate, a very large amount of heat is not required and additional explosion proof facility is not required, which makes it easier to form the first porous coating layer 20.

In a specific embodiment of the present disclosure, the first porous coating layer 20 may have the thickness ranging 1 *µ*m to 5 *µ*m, or 2 *µ*m to 4 *µ*m, or 2 *µ*m to 3 *µ*m. When the first porous coating layer 20 has the above-described range of thicknesses, it is possible to ensure thinning of the separator, low resistance and high heat resistance of the separator.

In an embodiment of the present disclosure, the average pore size of the first porous coating layer 20 may be 40 nm to 150 nm, or 45 nm to 120 nm, or 50 nm to 100 nm. When the average pore size of the first porous coating layer 20 satisfies the above-described range, it is possible to prevent the permeation of the third binder polymer of the electrode adhesion layer into the pores of the first porous coating layer 20 when forming the electrode adhesion layer as described below, thereby ensuring the adhesive property with electrode, so it may be easy to form the electrode adhesion layer on the upper surface of the first porous coating layer 20. Additionally, it may be easy to prevent the excessive rise in resistance and manufacturing cost of the separator.

Additionally, in an embodiment of the present disclosure, the maximum pore size of the first porous coating layer 20 may be 200 nm to 400 nm, or 250 nm to 350 nm.

In an embodiment of the present disclosure, the average or maximum pore size of the first porous coating layer 20 may be adjusted depending on the average particle size of the first inorganic particles.

In an embodiment of the present disclosure, the average or maximum pore size of the first porous coating layer 20 may be measured by capillary flow porometry. The capillary flow porometry measures the diameter of the smallest pore in the thicknesswise direction. Accordingly, to measure the average or maximum pore size of the first porous coating layer 20 by capillary flow porometry, it is necessary to separate the first porous coating layer 20 from the porous polymer substrate 10, and wrap the separated first porous coating layer 20 with a non-woven fabric to support the first porous coating layer 20, and in this instance, the average pore size of the non-woven fabric should be much larger than the average pore size of the first porous coating layer 20.

In an embodiment of the present disclosure, the porosity of the first porous coating layer 20 may be 45% to 70%, or 50% to 70%, or 55% to 70%. When the first porous coating layer 20 has the above-described porosity, it may be easy to prevent the permeation of the third binder polymer into the pores of the first porous coating layer 20.

The porosity of the first porous coating layer 20 may be measured by subtracting the volume converted from the weight and density of each component of the first porous coating layer 20 from the volume calculated using the thickness, width, length of the first porous coating layer 20. The porosity of the first porous coating layer 20 may be measured by 6-point BET method according to a nitrogen gas adsorption-flow method using scanning electron microscope (SEM) image, Mercury porosimeter, or porosimetry analyzer (Bell Japan Inc, Belsorp-II mini)

Referring to FIG. 1, the separator 1 for an electrochemical device comprises a second porous coating layer 30 comprising second inorganic particles and a second binder polymer on the other surface of the porous polymer substrate 10. The second porous coating layer 30 may be formed by coating a slurry comprising the second inorganic particles and the second binder polymer on the other surface of the porous polymer substrate 10, performing phase separation, and drying.

The second porous coating layer 30 comprises node(s) comprising the second inorganic particles and the second binder polymer that coats at least part of the surface of the second inorganic particles; and filament(s) formed from the second binder polymer of the node in the shape of thread, wherein at least one filament extends from one node and the filaments are arranged in a manner of connecting any one node to another node. The plurality of filaments derived from the second binder polymer crosses each other to form a 3D network structure of a non-woven fabric-like structure, the second inorganic particles are at least partially embedded in the filaments of the second binder polymer within the network structure and the particles are distributed at a predetermined distance from each other through the filament(s). In the present disclosure, the pore of the second porous coating layer 30 refers to a space formed between the filaments crossing each other. In terms of high porosity, the second inorganic particles may be spaced apart by a distance that is at least equal to or greater than the average diameter range of the second inorganic particles. The diameter of the filament may be smaller than the diameter of the node.

The second porous coating layer 30 has a unique pore structure of a node-filament composite that is different from a pore structure such as a finger like structure formed by non-solvent diffusion of the second binder polymer or a benard cell formed by opening a part of the second binder polymer. The separator having the second porous coating layer 30 has good adhesive property with electrode, but may have poor heat resistance.

In an embodiment of the present disclosure, the second porous coating layer 30 may be an organic coating layer using an organic slurry. The organic slurry refers to a slurry using an organic solvent as a dispersing medium as opposed to an aqueous slurry using water as a solvent or dispersing medium in polymer.

In a specific embodiment of the present disclosure, the second binder polymer may be a poly(vinylidene fluoride)-based copolymer. Specifically, the second binder polymer may comprise at least one of poly(vinylidene fluoride-co-hexafluoropropylene), poly(vinylidene fluoride-co-trichloroethylene), poly(vinylidene fluoride-co-tetrafluoroethylene), or poly(vinylidene fluoride-co-trifluoroethylene). For example, when the second binder polymer comprises poly(vinylidene fluoride-co-hexafluoropropylene) or poly(vinylidene fluoride-co-tetrafluoroethylene), the best effect may be obtained. These polymers have good adhesive property, so it may be easy for the separator for an electrochemical device having the second porous coating layer 30 to have good adhesive property with electrode.

In an embodiment of the present disclosure, the thickness of the second porous coating layer 30 may range 0.5 *µ*m to 5 *µ*m, or 1 *µ*m to 4 *µ*m, or 3 *µ*m to 4 *µ*m. When the second porous coating layer 30 has the above-described range of thicknesses, the adhesive property with electrode may be good and as a result, the cell strength of the battery may increase. Additionally, it may be advantageous in terms of the cycling characteristics and resistance characteristics of the battery.

In an embodiment of the present disclosure, the average pore size of the second porous coating layer 30 may be 50 nm to 2,000 nm, or 100 nm to 900 nm. In an embodiment of the present disclosure, the average pore size of the second porous coating layer 30 may be measured by capillary flow porometry. The capillary flow porometry measures the diameter of the smallest pore in the thicknesswise direction. Accordingly, to measure the average pore size of the second porous coating layer 30 by capillary flow porometry, it is necessary to separate the second porous coating layer 30 from the porous polymer substrate 10 and wrap the separated second porous coating layer 30 with a non-woven fabric to support the second porous coating layer 30, and in this instance, the average pore size of the non-woven fabric should be much larger than the average pore size of the second porous coating layer 30.

In an embodiment of the present disclosure, the porosity of the second porous coating layer 30 may be 40% to 85%, or 50% to 75%. When the average pore size of the second porous coating layer 30 is in the above-described range, it may be easy to ensure the dynamic characteristics capable of withstanding the press process of adhering with the electrode, a surface void ratio may not increase so much, and it may be suitable to ensure the adhesive property with electrode. Additionally, when the porosity of the second porous coating layer 30 is in the above-described range, it is usually higher than the porosity of the porous polymer substrate 10, thereby providing an ion permeability advantage.

The porosity of the second porous coating layer 30 may be measured by subtracting the volume converted from the weight and density of each component of the second porous coating layer 30 from the volume calculated using the thickness, width, length of the second porous coating layer 30. The porosity of the second porous coating layer 30 may be measured by 6-point BET method according to a nitrogen gas adsorption-flow method using scanning electron microscope (SEM) image, Mercury porosimeter, or porosimetry analyzer (Bell Japan Inc, Belsorp-II mini)

The first inorganic particles or the second inorganic particles may include, without limitation, any type of inorganic particle that is electrochemically stable. That is, the first and/or second inorganic particles may include, without limitation, any type of inorganic particle that does not cause oxidation and/or reduction reactions in the operating voltage range (for example, 0~5V vs Li/Li+) of the electrochemical device applied. In particular, the use of inorganic particles capable of transporting an ion as the first and/or second inorganic particles may increase the ionic conductivity in the electrochemical device, contributing to the improved performance. Additionally, the use of high dielectric constant inorganic particles as the first and/or second inorganic particles may contribute to the increased degree of dissociation of an electrolyte salt in a liquid electrolyte, for example, a lithium salt, thereby improving the ionic conductivity of the electrolyte solution.

By the above-described reasons, the first and/or second inorganic particles may comprise high dielectric constant inorganic particles having the dielectric constant of 5 or more, or 10 or more. Non-limiting examples of the inorganic particle having the dielectric constant of 5 or more may include at least one of BaTiO₃, BaSO₄, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, Y₂O₃, SiO₂, Al₂O₃, γ-AlOOH, Al(OH)₃, SiC or TiO₂.

The first and/or second inorganic particles may comprise inorganic particles capable of transporting a lithium ion or a mixture thereof. That is, inorganic particles that contain lithium but do not store lithium and have a function of moving a lithium ion, may be used. Non-limiting examples of the inorganic particles capable of transporting a lithium ion may include at least one of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} based glass (0<x<4, 0<y<13) such as such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w< 5) such as Li_{3.25}Ge_{0.25}P_{0.75}S₄, lithium nitride (LiₓN_{y}, 0<x<4, 0<y<2) such as Li₃N, SiS₂ based glass (LiₓSi_{y}S_{z}, 0<x<3, 0<y<2, 0<z<4) such as Li₃PO₄-Li₂S-SiS₂, or P₂S₅ based glass (LiₓP_{y}S_{z}, 0<x< 3, 0<y<3, 0<z<7) such as LiI-Li₂S-P₂S₅. When the high dielectric constant inorganic particles and the inorganic particles capable of transporting a lithium ion are used in combination, their synergistic effect may be magnified.

In an embodiment of the present disclosure, the average particle size of the first inorganic particles may be smaller than the average particle size of the second inorganic particles. As the average particle size of the first inorganic particles is smaller, the first inorganic particles may be denser per unit volume, resulting in improved heat resistance. Along with this, it may be easy to ensure the adhesion of the second porous coating layer to electrode.

In an embodiment of the present disclosure, the average particle size of the first inorganic particles may be 0.01 times to 0.99 times, or 0.03 times to 0.9 times, or 0.1 times to 0.5 times smaller than the average particle size of the second inorganic particles. When the average particle size of the first inorganic particles has the above-described range, the first inorganic particles may be denser per unit volume, so it is possible to provide better heat resistance and it may be easy to ensure adhesion of the second porous coating layer to electrode.

In an embodiment of the present disclosure, the average particle size of the first inorganic particles may be 10 nm to 800 nm, or 15 nm to 600 nm, or 20 nm to 400 nm, or 20 nm to 200 nm. For example, the average particle size of the first inorganic particles may be smaller than the average particle size of the second inorganic particles, and the average particle size of the first inorganic particles may be 10 nm to 800 nm, or 15 nm to 600 nm, or 20 nm to 400 nm, or 20 nm to 200 nm.

In an embodiment of the present disclosure, the average particle size of the second inorganic particles may be 200 nm to 1000 nm, or 200 nm to 400 nm, or 400 nm to 900 nm, or 500 nm to 800 nm. For example, the average particle size of the first inorganic particles may be smaller than the average particle size of the second inorganic particles, and the average particle size of the second inorganic particles may be 200 nm to 1000 nm, or 400 nm to 900 nm, or 500 nm to 800 nm.

In an embodiment of the present disclosure, the average particle size of the first inorganic particles may be smaller than the average particle size of the second inorganic particles, the average particle size of the first inorganic particles may be 10 nm to 800 nm, 15 nm to 600 nm, or 20 nm to 400 nm, or 20 nm to 200 nm, and the average particle size of the second inorganic particles may be 200 nm to 1000 nm, or 200 nm to 400 nm, or 400 nm to 900 nm, or 500 nm to 800 nm. For example, when the average particle size of the first inorganic particles is 200 nm, the average particle size of the second inorganic particles may be larger than 200 nm in the range of 200 nm to 1000 nm.

In an embodiment of the present disclosure, the average particle size of the first inorganic particles may be smaller than the average particle size of the second inorganic particles, the average particle size of the first inorganic particles may be 10 nm to 100 nm, or 15 nm to 60 nm, or 20 nm to 40 nm, and the average particle size of the second inorganics may be 200 nm to 1000 nm, or 200 nm to 400 nm, or 400 nm to 900 nm, or 500 nm to 800 nm.

When the average particle size of the first inorganic particles satisfies the above-described range, the first porous coating layer 20 may have better heat resistance. Specifically, when the average particle size of the first inorganic particles is 800 nm or less, since the first inorganic particles are small in size, the first inorganic particles may be densely arranged in the first porous coating layer 20. The first inorganic particles in the first porous coating layer 20 in dense arrangement may serve to suppress the thermal contraction of the separator when there is an internal or external change.

When the average particle size of the second inorganic particles satisfies the above-described range, the resistance may not rise and good adhesion may be ensured. Specifically, when the average particle size of the second inorganic particles is 200 nm or more, it is possible to prevent the specific surface area of the second inorganic particles from increasing too much, which makes it easy to prevent the amount of second binder polymer for forming the second porous coating layer 30 from increasing too much. Accordingly, it may be easy to prevent the resistance rise of the separator.

The average particle size of the first inorganic particles and the second inorganic particles as used herein refers to D50 particle size, and "D50 particle size" refers to the particle size at 50% in the cumulative particle size distribution. The particle size may be measured using a laser diffraction method. Specifically, after powder to be measured is dispersed in a dispersing medium and introduced into commercially available laser diffraction particle size measurement equipment (for example, Microtrac S3500), the particle size distribution is calculated by measuring a diffraction pattern difference according to the particle size when particles pass through a laser beam. D50 particle size may be measured by calculating the particle diameter at 50% in the cumulative particle size distribution in the measurement device.

A weight ratio between the first inorganic particles and the first binder polymer included in the slurry for forming the first porous coating layer 20 may be determined considering the thickness, the average pore size and the porosity of the first porous coating layer 20 of the present disclosure as finally formed. In a specific embodiment of the present disclosure, the weight ratio between the first inorganic particles and the first binder polymer may be 90:10 to 99:1, or 95:5 to 98.5:1.5. When the weight ratio between the first inorganic particles and the first binder polymer is in the above-described range, it is easy to form interstitial volume between the first inorganic particles in substantial contact with each other, thereby improving the thermal shrinkage of the separator, and improving the resistance against foreign impurities. Additionally, it is possible to ensure the average pore size and the porosity of the first porous coating layer 20, which makes it easy to form the electrode adhesion layer on the upper surface of the first porous coating layer 20, and adhesion between the first inorganic particles may be easy to be maintained, which makes it easy to improve the mechanical properties of the first porous coating layer 20.

A weight ratio between the second inorganic particles and the second binder polymer included in the slurry for forming the second porous coating layer 30 may be determined considering the thickness, the average pore size and the porosity of the second porous coating layer 30 of the present disclosure as finally formed. In a specific embodiment of the present disclosure, the weight ratio between the second inorganic particles and the second binder polymer may be 50:50 to 80:20, or 60:40 to 75:25. When the weight ratio between the second inorganic particles and the second binder polymer is in the above-described range, it is easy to form a node-thread structure comprising a plurality of nodes comprising the second inorganic particles and the second binder polymer that coats at least part of the surface of the second inorganic particles; and a node connected part comprising at least one filament formed from the second binder polymer of the node in the shape of thread, the filaments extending from the node and connecting another node, wherein the node connected part has a 3D network structure in which the plurality of filaments derived from the second binder polymer cross each other, thereby improving the close contact between the separator surface and its adjacent electrode. Additionally, it is possible to ensure the average pore size and the porosity of the second porous coating layer 30, which makes it easy to improve the final battery performance, and adhesion between the second inorganic particles may be easy to be maintained, which makes it easy to improve the mechanical properties of the second porous coating layer 30.

Referring to FIG. 1, the separator 1 for an electrochemical device comprises an electrode adhesion layer 40 comprising a third binder polymer on the upper surface of the first porous coating layer 20. The electrode adhesion layer 40 gives the adhesive property to the first porous coating layer 20 having good heat resistance but low adhesive property with electrode, which makes the surface of the porous polymer substrate having the first porous coating layer 20 adhere to the electrode well. The electrode adhesion layer 40 may be formed by coating a coating solution comprising the third binder polymer on the upper surface of the first porous coating layer 20, performing phase separation and drying.

In an embodiment of the present disclosure, the weight average molecular weight of the third binder polymer measured by gel permeation chromatography (GPC) may be 250,000 to 500,000, or 270,000 to 450,000, or 250,000 to 400,000.

The weight average molecular weight is measured by gel permeation chromatography (PL GPC220, Agilent Technologies) in the following condition:
- Column: PL Olexis (Polymer Laboratories)
- Solvent: TCB (Trichlorobenzene)
- Flow rate: 1.0 ml/min
- Specimen concentration: 1.0 mg/ml
- Injection amount: 200 µℓ
- Column temperature: 160°C
- Detector: Agilent High Temperature RI detector
- Standard: Polystyrene (fitted to a third degree polynominal)

In an embodiment of the present disclosure, the radius of gyration of the third binder polymer of the separator 1 for an electrochemical device may be 150 nm to 500 nm, or 150 nm to 450 nm, or 150 nm to 400 nm.

In this instance, the radius of gyration or gyradius of the third binder polymer refers to an average distance from the center of mass of the third binder polymer chain to each polymer chain fracture.

The radius of gyration of the third binder polymer may differ depending on interaction between the binder polymer and the solvent, and may differ depending on the weight average molecular weight of the binder polymer. For example, as the main chain length of the polymer is longer due to high molecular weight of the polymer, the radius of gyration of the polymer may increase. Additionally, as the degree of dissolution of the polymer in the selected solvent is higher, the main chain of the polymer may disentangle and the radius of gyration of the polymer may increase. In contrast, as the degree of dissolution of the polymer in the selected solvent is lower, the entanglement tendency of the main chains of the polymer in the solvent may increase, so even the polymer of the same molecular weight may reduce in the radius of gyration.

In an embodiment of the present disclosure, the radius of gyration may be measured by a dynamic light scattering (DLS) method. The dynamic light scattering method involves emitting a laser light to polymer, detecting the scattering of light having different phases (Doppler shift) according to the speed of Brownian motion of dispersed particles in the polymer, and calculating a distribution of radius of gyration of the polymer. For example, the radius of gyration may be measured using Otsuka DLS-8000.

When the third binder polymer has the weight average molecular weight and/or the radius of gyration in the above-described range, it may be easier to prevent the permeation of the third binder polymer into the pores of the first porous coating layer 20, and prevent the reduction in coating uniformity caused by too high viscosity of the coating solution comprising the third binder polymer. Additionally, it may be easy to prevent the problem that the adhesive property with electrode is insufficient due to the unmodified third binder polymer when the electrode and the separator are adhered by lamination due to high elastic modulus of the third binder polymer.

In an embodiment of the present disclosure, the third binder polymer may be a poly(vinylidene fluoride)-based copolymer. Specifically, the second binder polymer may comprise at least one of poly(vinylidene fluoride-co-hexafluoropropylene), poly(vinylidene fluoride-co-trichloroethylene), poly(vinylidene fluoride-co-tetrafluoroethylene) or poly(vinylidene fluoride-co-trifluoroethylene). For example, when the third binder polymer comprises poly(vinylidene fluoride-co-hexafluoropropylene) or poly(vinylidene fluoride-co-tetrafluoroethylene), the best effect may be obtained. Since these polymers have good adhesive property, it may be easy for the separator for an electrochemical device having the electrode adhesion layer 40 to ensure the outstanding adhesive property with electrode.

In an embodiment of the present disclosure, the thickness of the electrode adhesion layer 40 may range 0.5 *µ*m to 1.5 *µ*m, or 0.6 *µ*m to 1.2 *µ*m, or 0.6 *µ*m to 1.0 *µ*m. When the electrode adhesion layer 40 has the above-described range of thicknesses, the adhesive property with electrode may be good and as a result, the cell strength of battery may increase. Additionally, it may be advantageous in terms of the cycling characteristics and resistance characteristics of the battery.

In a specific embodiment of the present disclosure, the separator 1 may have the thickness ranging 7 µm to 18 µm.

The separator for an electrochemical device according to an embodiment of the present disclosure has different pore structures in the first porous coating layer disposed on one surface of the porous polymer substrate and the second porous coating layer disposed on the other surface of the porous polymer substrate.

When the porous coating layer having high heat resistance is formed on both surfaces of the porous polymer substrate, and the electrode adhesion layer is formed on the each surface of porous coating layer using binder polymer having good adhesive property to ensure the adhesive property with electrode as before, the binder polymer having good adhesive property enters and clogs the pores of the porous coating layer, and a sufficient amount of binder polymer does not remain on the upper surface of the porous coating layer, failing to form the electrode adhesion layer.

The separator for an electrochemical device 1 according to an embodiment of the present disclosure comprises both the first porous coating layer 20 on one surface of the porous polymer substrate 10 and the second porous coating layer 30 on the other surface of the porous polymer substrate 10, and thus has high heat resistance and improved adhesive property with electrode. Specifically, the separator 1 for an electrochemical device according to an embodiment of the present disclosure may have heat resistance through the first porous coating layer 20, and adhesive property with electrode through the second porous coating layer 30. The first porous coating layer 20 has high heat resistance, but poor adhesive property with electrode, but the separator 1 according to an embodiment of the present disclosure has the electrode adhesion layer 40 comprising the third binder polymer on the upper surface of the first porous coating layer 20, thereby providing the improved adhesive property with electrode.

The separator for an electrochemical device according to an embodiment of the present disclosure may comprise the electrode adhesion layer 40 on the upper surface the first porous coating layer 20 to prevent the permeation of the third binder polymer into the pores of the first porous coating layer 20 by adjusting the average pore size of the first porous coating layer 20, the weight average molecular weight of the third binder polymer, or the radius of gyration of the third binder polymer.

For example, the electrode adhesion layer 40 may be formed on the upper surface of the first porous coating layer 20 to prevent the permeation of the third binder polymer into the pores of the first porous coating layer 20 by adjusting the average pore size of the first porous coating layer 20 and the weight average molecular weight of the third binder polymer.

Additionally, the electrode adhesion layer 40 may be formed on the upper surface of the first porous coating layer 20 to prevent the permeation of the third binder polymer into the pores of the first porous coating layer 20 by adjusting the average pore size of the first porous coating layer 20 and the radius of gyration of the third binder polymer.

Additionally, the electrode adhesion layer 40 may be formed on the upper surface of the first porous coating layer 20 to prevent the permeation of the third binder polymer into the pores of the first porous coating layer 20 by adjusting the average pore size of the first porous coating layer 20, the weight average molecular weight of the third binder polymer and the radius of gyration of the third binder polymer at the same time.

In an embodiment of the present disclosure, the thermal shrinkage in each of Machine Direction and Transverse Direction may be 20% or less, or 0% to 20%, or 0% to 10%, or 0% to 5%, or 0% to 3% when measured after the separator for an electrochemical device is left at 150°C for 30 min.

In an embodiment of the present disclosure, the separator for an electrochemical device may have the adhesion strength with electrode of 70 gf/25 mm or more, or 90 gf/25 mm or more, or 100 gf/25 mm or more.

For example, the separator for an electrochemical device may have the adhesion strength with electrode of 70 gf/25 mm or more, or 90 gf/25 mm or more, or 100 gf/25 mm or more on both the two surfaces of the separator.

In an embodiment of the present disclosure, the adhesive property with electrode may be measured from a force necessary to separate two separators when a force is applied to the adhered separators in two directions at the measurement speed 300 mm/min after inserting the separators between 100 *µ*m PET films and allowing the separators to pass through roll laminators to adhere them.

For example, the two separators are stacked facing each other and inserted between 100 *µ*m PET films and are allowed to pass through the 100°C roll laminator while heating under the pressure of 2kgf/cm² at the speed of 0.3 m/min for 30 seconds to adhere them, the ends of the two adhered separators are mounted in UTM equipment (LLOYD Instrument LF Plus), a force is applied in two directions at the measurement speed of 300 mm/min, and the adhesion of the separator to electrode may be measured from a force necessary to separate the adhered separators.

The separator for an electrochemical device according to an embodiment of the present disclosure may be manufactured by the following method, but is not limited thereto.

The method for manufacturing a separator for an electrochemical device according to an embodiment of the present disclosure comprises:
Step (S1) of preparing a porous polymer substrate;
Step (S2) of coating a first slurry comprising first inorganic particles, a first binder polymer and a first solvent on one surface of the porous polymer substrate and drying to form a first porous coating layer;
Step (S3) of coating a second slurry comprising second inorganic particles, a second binder polymer and a second solvent on the other surface of the porous polymer substrate;
Step (S4) of coating a coating solution comprising a third binder polymer and a third solvent on the upper surface of the first porous coating layer;
Step (S5) of performing phase separation in the result of (S3) step and the result of (S4) step using a first non-solvent and a second non-solvent respectively; and
Step (S6) of drying the result of (S5) step to form a second porous coating layer and an electrode adhesion layer.

Hereinafter, the main steps of the manufacturing method will be described.

First, the porous polymer substrate is prepared. The porous polymer substrate may be used as described above, and the porous polymer substrate may be manufactured by forming the pores through a method commonly used in the corresponding technical field, for example, a wet method using a solvent, a diluent or a pore forming agent or a dry method using a stretching process, to ensure good air permeability and porosity from the above-described material.

Subsequently, the first slurry comprising the first inorganic particles, the first binder polymer, and the first solvent is coated on one surface of the porous polymer substrate and dried to form the first porous coating layer (S2).

In a specific embodiment of the present disclosure, for details of the type of the first inorganic particles and the first binder polymer, the average particle size of the first inorganic particles, and the weight ratio between the first inorganic particles and the first binder polymer, a reference is made to the above description.

The first solvent may serve as a solvent that dissolves the first binder polymer, or a dispersing medium that does not dissolve the first binder polymer and disperses the first binder polymer, depending on the type of the first binder polymer.

In a specific embodiment of the present disclosure, the first binder polymer may comprise at least one of styrene butadiene rubber, acrylic polymer, polyvinylalcohol or carboxymethylcellulose. Specifically, the styrene butadiene rubber may be dispersed in the first solvent in the form of particles. The acrylic polymer may comprise polyacrylic acid and polyacrylate. The polyacrylic acid may be dissolved in the first solvent.

In a specific embodiment of the present disclosure, the first solvent may comprise at least one of water, methanol, ethanol or isopropyl alcohol. When the first solvent is water, it is eco-friendly, an excessive amount of heat is not required in forming and drying the first porous coating layer on one surface of the porous polymer substrate, and additional explosion protection equipment is not required, which makes it easier to form the first porous coating layer. When the first solvent is water, the first binder polymer may be a binder polymer that is dissolved or dispersed in water. When the first solvent is water, the substrate may be hydrophilized, or a small amount of surfactant may be added to the first slurry to ensure wettability between the porous polymer substrate and the first slurry.

The first slurry may be prepared by dissolving or dispersing the first binder polymer in the first solvent, and adding and dispersing the first inorganic particles. The first inorganic particles may be added in a pulverized form to have a predetermined average particle size, or the first inorganic particles may be added to a solution in which the first binder polymer is dissolved, and then the first inorganic particles may be pulverized and dispersed using a ball mill method while controlling to have a predetermined average particle size.

In a specific embodiment of the present disclosure, the first slurry may be coated on one surface of the porous polymer substrate by a predetermined coating method, and non-limiting examples of the coating method may include a dip coating method, a die coating method, a roll coating method, a comma coating method, a doctor blade coating method, a Mayer bar coating method, a reverse roll coating method and a direct roll coating method.

According to a specific embodiment of the present disclosure, the coated first slurry may be dried by a drying method used commonly when manufacturing separator. For example, the drying of the coated first slurry may be performed by air for 3 to 45 seconds or 5 to 40 seconds. When the drying is performed in the above-described time range, it is possible to remove the remaining solvent while not reducing productivity.

To ensure both the heat resistance and adhesive property, when the porous coating layer having high heat resistance is formed on both surfaces of the porous polymer substrate, it is impossible to connect the porous polymer substrate having the porous coating layer formed on the both surfaces of the porous polymer substrate to another porous polymer substrate, failing to achieve continuous production.

However, when the first porous coating layer is formed on only one surface of the porous polymer substrate, it is easy to connect the porous polymer substrate having the first porous coating layer to another porous polymer substrate having the first porous coating layer on one surface. Thus, it is easy to continuously form the coating layer on the other surface of the porous polymer substrate having the first porous coating layer on one surface.

In the first porous coating layer formed as described above, the first inorganic particles are held together by the first binder polymer that adheres the first inorganic particles to each other, and the first inorganic particles and the porous polymer substrate are kept in a bonded state by the first binder polymer, and interstitial volume is formed between the first inorganic particles in substantial contact with each other and is a void space which forms the pores of the first porous coating layer.

Subsequently, the second slurry comprising the second inorganic particles, the second binder polymer and the second solvent is coated on the other surface of the porous polymer substrate (S3).

The step (S3) of coating the second slurry is performed after coating the first slurry on only one surface of the porous polymer substrate and drying to form the first porous coating layer.

In a specific embodiment of the present disclosure, for details of the type of the second inorganic particles and the second binder polymer, the average particle size of the second inorganic particles and the weight ratio between the second inorganic particles and the second binder polymer, a reference is made to the above description.

The second solvent refers to a solvent for the second binder polymer. In a specific embodiment of the present disclosure, the second solvent may comprise at least one of acetone, tetrahydrofuran, methylene chloride, chloroform, trimethyl phosphate, triethyl phosphate, methyl ethyl ketone (MEK), toluene, hexane, cyclohexane, dimethyl formamide (DMF), dimethyl acetamide (DMAc) or N-methyl-2-pyrrolidone (NMP).

The second slurry may be prepared by dissolving the second binder polymer in the second solvent and adding and dispersing the second inorganic particles. The second inorganic particles may be added in pulverized form to have a predetermined average particle size, or the second inorganic particles may be added to a solution in which the second binder polymer is dissolved, and then the second inorganic particles may be pulverized and dispersed using a ball mill method while controlling to have a predetermined average particle size.

In a specific embodiment of the present disclosure, the second slurry may be coated on the other surface of the porous polymer substrate by a predetermined coating method, and non-limiting examples of the coating method may include a dip coating method, a die coating method, a roll coating method, a comma coating method, a doctor blade coating method, a Mayer bar coating method, a reverse roll coating method and a direct roll coating method.

Subsequently, the coating solution comprising the third binder polymer and the third solvent is coated on the upper surface of the first porous coating layer (S4).

In case that the coating step (S4) is performed after coating and drying the second slurry coated on the other surface of the porous polymer substrate to form the second porous coating layer, the coating solution easily permeates into the pores of the underlying first porous coating layer, which makes it difficult to ensure the adhesive property intended to achieve.

In contrast, the coating step (S4) is performed when the second solvent of the second slurry coated on the other surface of the porous polymer substrate is not dried. Accordingly, when the second solvent of the second slurry is not dried, the coating solution is coated on the upper surface of the first porous coating layer.

In the process of coating the second slurry on the other surface of the porous polymer substrate, the second solvent of the second slurry permeates into the pores of the porous polymer substrate. Further, the second solvent of the second slurry permeates into the pores of the first porous coating layer formed on one surface of the porous polymer substrate that is opposite to the other surface of the porous polymer substrate coated with the second slurry. After the second solvent of the second slurry permeates into the pores of the first porous coating layer, the electrode adhesion layer may be formed on the upper surface of the first porous coating layer, to minimize the permeation of the third binder polymer into the pores of the first porous coating layer when the coating solution comprising the third binder polymer is coated on the upper surface of the first porous coating layer, thereby ensuring sufficient adhesive property with electrode.

In an embodiment of the present disclosure, the solids content of the second slurry may be 15% to 50%, or 20% to 45%. When the solids content of the second slurry satisfies the above-described range, the probability that the second binder polymer dissolved by the second solvent in the second slurry blocks the pores of the first porous coating layer is very low, so it may be easy to prevent the clogging of the pores of the first porous coating layer.

For details of the type of the third binder polymer and the weight average molecular weight and the radius of gyration of the third binder polymer, a reference is made to the above description.

The third solvent refers to a solvent for the third binder polymer.

In a specific embodiment of the present disclosure, the third solvent may be at least one of acetone, tetrahydrofuran, methylene chloride, chloroform, trimethyl phosphate, triethyl phosphate, methyl ethyl ketone (MEK), toluene, hexane, cyclohexane, dimethyl formamide (DMF), dimethyl acetamide (DMAc) or N-methyl-2-pyrrolidone (NMP).

In a specific embodiment of the present disclosure, the coating solution may be coated on the upper surface of the first porous coating layer by a predetermined coating method, and non-limiting examples of the coating method may include a dip coating method, a die coating method, a roll coating method, a comma coating method, a doctor blade coating method, a Mayer bar coating method, a reverse roll coating method and a direct roll coating method.

Subsequently, phase separation is performed in the result of the (S3) step and the result of the (S4) step using the first non-solvent and the second non-solvent respectively (S5). The phase separation step is a step of performing phase separation of the coated second slurry and the coating solution to form the second porous coating layer and the electrode adhesion layer. After coating the second slurry on the other surface of the porous polymer substrate, and coating the coating solution on the upper surface of the first porous coating layer, the phase separation process may be performed to form a pore structure in the second porous coating layer and the electrode adhesion layer.

The first non-solvent refers to a non-solvent for the second binder polymer. In a specific embodiment of the present disclosure, the first non-solvent is not limited to a particular type and may include any non-solvent that does not dissolve the second binder polymer and is partially compatible with the second solvent, and specifically, the first non-solvent may comprise at least one of water, methanol, ethanol, isopropanol, propylalcohol, butylalcohol, butandiol, ethylene glycol or propylene glycol.

The phase separation may be performed in the second slurry using the first non-solvent. The phase separation step may use a vapor induced phase separation method involving phase separation by condensation of the first non-solvent introduced by vapor on the surface on which the second slurry is coated, an non-solvent induced phase separation method involving phase separation by direct immersion of a film coated with the second slurry in a tank comprising the first non-solvent, a method of spraying the first non-solvent on the surface coated with the second slurry in the form of gas or microdroplet, and a direct phase separation method of the coated second slurry. In this instance, the direct phase separation method may involve phase separation by adding the first non-solvent to the second slurry, coating the second slurry on the other surface of the porous polymer substrate and drying. In particular, the non-solvent induced phase separation method may involve additionally allowing the first non-solvent to pass through press rolls after phase separation, to minimize the amount of the first non-solvent, thereby reducing the burden in the drying step.

The vapor induced phase separation will be described as follows.

The vapor induced phase separation may involve exposing the separator coated with the second slurry on the other surface of the porous polymer substrate under the first non-solvent atmosphere in a gas or microdroplet state to cause phase separation. In this instance, the first non-solvent may be introduced in a gas state. When the first non-solvent is introduced in a gas state, it is possible to perform phase separation using a small amount of first non-solvent, and facilitate the drying of the second slurry.

In this instance, the temperature at which the first non-solvent in a gas or microdroplet state is added may range 15°C to 70°C. When the temperature at which the first non-solvent in a gas state is added satisfies the above-described range, the first non-solvent may be easy to maintain the gas state, the drying rate of the second slurry may be ensured, thereby improving the productivity, and it may be easy to prevent the insufficient phase separation caused by too fast drying of the second solvent and the first non-solvent.

Additionally, the phase separation may be performed in the condition in which the vapor pressure of the first non-solvent is 40% to 80%, or 60% to 75% compared to the saturated vapor pressure during the phase separation. When the vapor pressure of the first non-solvent satisfies the above-described range, it may be easy to prevent the problem with insufficient phase separation caused by too small amount of the first non-solvent or non-uniform coating caused by too much phase separation.

The non-solvent induced phase separation will be described as follows.

The second slurry coated on the other surface of the porous polymer substrate may be immersed in a coagulant solution comprising the first non-solvent for a predetermined time. Accordingly, in the coagulant solution, the first non-solvent is substituted for the second solvent in the second slurry, inducing phase separation, and solidification of the second binder polymer occurs. In this process, the second porous coating layer comprising the second binder polymer and the second inorganic particles becomes porous. Subsequently, the first non-solvent may be substituted for the second solvent remaining in the second porous coating layer by washing with pure first non-solvent, and then removed in a drying furnace to form the second porous coating layer on the other surface of the porous polymer substrate.

The coagulant solution may include the first non-solvent alone or a mixed solvent of the first non-solvent and the second solvent as described above. When the mixed solvent of the first non-solvent and the second solvent is used, the amount of the first non-solvent may be 60 weight% or more based on 100 weight% of the coagulant solution in terms of good pore structure formation and productivity improvement.

According to a specific embodiment of the present disclosure, the second porous coating layer may be dried by a drying method commonly used when manufacturing a separator. For example, the drying of the second porous coating layer may be performed by air for 3 to 45 seconds or 5 to 40 seconds. When the drying is performed in the above-described time range, it is possible to remove the remaining solvent while not reducing productivity.

The second porous coating layer formed as described above comprises node(s) comprising the second inorganic particles and the second binder polymer that coats at least part of the surface of the second inorganic particles and filament(s) formed from the second binder polymer of the node in the shape of thread, wherein at least one filament extends from one node and the filaments are arranged in a manner of connecting any one node to another node. The plurality of filaments derived from the second binder polymer crosses each other to form a 3D network structure of a non-woven fabric like structure, at least part of the second inorganic particles is embedded in the filaments of the second binder polymer in the network structure, and the particles are distributed at a predetermined distance apart by the medium of the filament(s). Additionally, the pores are formed between the filaments crossing each other.

The second non-solvent refers to a non-solvent for the third binder polymer. In a specific embodiment of the present disclosure, the second non-solvent is not limited to a particular type and may include any non-solvent that does not dissolve the third binder polymer and is partially compatible with the third solvent, and specifically, the second non-solvent may comprise at least one of water, methanol, ethanol, isopropanol, propylalcohol, butylalcohol, butandiol, ethylene glycol or propylene glycol.

The phase separation may be performed in the coating solution using the second non-solvent. The phase separation step may use a vapor induced phase separation method involving phase separation by condensation of the second non-solvent introduced by vapor on the surface coated with the coating solution, an non-solvent induced phase separation method involving phase separation by direct immersion of a film coated with the coating solution in a tank comprising the second non-solvent, a method of spraying the second non-solvent on the surface coated with the coating solution in the form of gas or microdroplet and a direct phase separation method of the coated coating solution. In this instance, the direct phase separation method may involve phase separation by adding a predetermined second non-solvent to the coating solution, coating the coating solution on the upper surface of the first porous coating layer and drying. In particular, the non-solvent induced phase separation method may involve additionally allowing the second non-solvent to pass through press rolls after phase separation, to minimize the amount of the second non-solvent, thereby reducing the burden in the drying step.

The vapor induced phase separation will be described as follows.

The vapor induced phase separation may involve exposing the separator coated with the coating solution on the upper surface of the first porous coating layer under the second non-solvent atmosphere in a gas or microdroplet state to cause phase separation. In this instance, the second non-solvent may be introduced in a gas state. When the second non-solvent is introduced in a gas state, it is possible to perform phase separation using a small amount of second non-solvent, and facilitate the drying of the coating solution.

In this instance, the temperature at which the second non-solvent in a gas or microdroplet state is added may range 15°C to 70°C. When the temperature at which the second non-solvent in a gas state is added satisfies the above-described range, the second non-solvent may be easy to maintain the gas state, the drying rate of the coating solution may be ensured, thereby improving the productivity, and it may be easy to prevent the insufficient phase separation caused by too fast drying of the third solvent and the second non-solvent.

Additionally, the phase separation may be performed in the condition in which the vapor pressure of the second non-solvent is 40% to 80%, or 60% to 75% compared to the saturated vapor pressure during the phase separation. When the vapor pressure of the second non-solvent satisfies the above-described range, it may be easy to prevent that problem with insufficient phase separation caused by too small amount of the second non-solvent or non- uniform coating caused by too much phase separation.

The non-solvent induced phase separation will be described as follows.

The second slurry coated on the other surface of the porous polymer substrate may be immersed in a coagulant solution comprising the second non-solvent for a predetermined time. Accordingly, in the coagulant solution, the second non-solvent may be substituted for the third solvent in the coating solution, inducing phase separation, and solidification of the third binder polymer occurs. In this process, the electrode adhesion layer comprising the third binder polymer becomes porous. Subsequently, the second non-solvent may be substituted for the third solvent remaining in the electrode adhesion layer by washing with pure second non-solvent, and then removed in a drying furnace to form the electrode adhesion layer on the upper surface of the first porous coating layer.

The coagulant solution may include the second non-solvent alone or a mixed solvent of the second non-solvent and the third solvent as described above. When the mixed solvent of the second non-solvent and the third solvent is used, the amount of the second non-solvent may be 60 weight% or more based on 100 weight% of the coagulant solution in terms of good pore structure formation and productivity improvement.

According to a specific embodiment of the present disclosure, the electrode adhesion layer may be dried by a drying method commonly used when manufacturing a separator. For example, the drying of the electrode adhesion layer may be performed by air for 3 to 45 seconds or 5 to 40 seconds. When the drying time is in the above-described range, it is possible to remove the remaining solvent while not reducing productivity.

The first non-solvent and the second non-solvent may be the same type, or may be different types.

In an embodiment of the present disclosure, when the first non-solvent and the second non-solvent are the same non-solvent, phase separation may occur at the same time on the other surface of the porous polymer substrate coated with the second slurry and the upper surface of the first porous coating layer coated with the coating solution under the second non-solvent (or the first non-solvent) atmosphere.

Additionally, in another embodiment of the present disclosure, when the first non-solvent and the second non-solvent are the same non-solvent, phase separation may occur at the same time by immersion of the separator comprising the porous polymer substrate coated with the second slurry on the other surface and the first porous coating layer coated with the coating solution on the upper surface in the coagulant solution comprising the second non-solvent (the first non-solvent).

To ensure both the heat resistance and adhesive property, when the porous coating layer having high heat resistance is formed on both the two surfaces of the porous polymer substrate, it is impossible to connect the porous polymer substrate having the porous coating layer on the both surfaces to another porous polymer substrate, failing to achieve continuous production.

However, the method for manufacturing a separator for an electrochemical device according to an embodiment of the present disclosure forms the first porous coating layer on only one surface of the porous polymer substrate, so it is easy to connect the porous polymer substrate having the first porous coating layer to another porous polymer substrate having the first porous coating layer on one surface, thereby continuously forming the separator.

Meanwhile, although the specification describes the method for manufacturing a separator for an electrochemical device according to an embodiment of the present disclosure in an order of forming the first porous coating layer, forming the second porous coating layer, and forming the electrode adhesion layer, the separator for an electrochemical device of the present disclosure is not necessarily manufactured in this order.

The method for manufacturing a separator for an electrochemical device according to another embodiment of the present disclosure may manufacture the separator for an electrochemical device by adjusting the average pore size of the first porous coating layer, the weight average molecular weight of the third binder polymer included in the electrode adhesion layer, and/or the radius of gyration of the third binder polymer.

The method for manufacturing a separator for an electrochemical device according to another embodiment of the present disclosure may form the electrode adhesion layer on the upper surface of the first porous coating layer at a sufficient level of adhesive property with electrode since the third binder polymer is not introduced into the pores of the first porous coating layer of which the average pore size is 40 nm to 150 nm. Accordingly, after coating and drying the second slurry, the electrode adhesion layer may be formed by coating the coating solution on the upper surface of the first porous coating layer and drying.

Alternatively, immediately after forming the first porous coating layer, before coating the second slurry, the electrode adhesion layer may be formed by coating the coating solution on the upper surface of the first porous coating layer and drying.

In an embodiment of the present disclosure, it is possible to adjust the average pore size of the first porous coating layer by adjusting the average particle size of the first inorganic particles.

The method for manufacturing a separator for an electrochemical device according to another embodiment of the present disclosure may form the electrode adhesion layer on the upper surface of the first porous coating layer at a sufficient level of adhesive property with electrode since the third binder polymer of which the weight average molecular weight measured by gel permeation chromatography is 250,000 to 500,000 is not introduced into the pores of the first porous coating layer. Accordingly, after coating and drying the second slurry, the electrode adhesion layer may be formed by coating the coating solution on the upper surface of the first porous coating layer and drying.

Alternatively, immediately after forming the first porous coating layer, before coating the second slurry, the electrode adhesion layer may be formed by coating the coating solution on the upper surface of the first porous coating layer and drying.

The method for manufacturing a separator for an electrochemical device according to another embodiment of the present disclosure may form the electrode adhesion layer on the upper surface of the first porous coating layer at a sufficient level of adhesive property with electrode since the third binder polymer of which the radius of gyration is 150 nm to 500 nm is not introduced into the pores of the first porous coating layer. Accordingly, after coating and drying the second slurry, the electrode adhesion layer may be formed by coating the coating solution on the upper surface of the first porous coating layer and drying.

Alternatively, immediately after forming the first porous coating layer, before coating the second slurry, the electrode adhesion layer may be formed by coating the coating solution on the upper surface of the first porous coating layer and drying.

The separator for an electrochemical device according to the present disclosure may be placed between the positive electrode and the negative electrode when manufacturing an electrochemical device.

The electrochemical device of the present disclosure may include any type of device using electrochemical reaction, and specific examples may include primary and secondary batteries, fuel cells, solar cells or capacitors such as super capacitors. Among the secondary batteries, in particular, the electrochemical device may be a lithium secondary battery comprising a lithium metal secondary battery, a lithium ion secondary battery, a lithium polymer secondary battery or a lithium ion polymer secondary battery.

The electrode to be used with the separator for an electrochemical device of the present disclosure is not limited to a particular type, and may be manufactured by binding an electrode active material to an electrode current collector by a common method known in the technical field pertaining to the present disclosure.

Of the electrode active material, non-limiting examples of the positive electrode active material may include layered compounds or compounds with one or more transition metal such as lithium cobalt composite oxide (LiCoO₂), lithium nickel oxide (LiNiO₂); lithium manganese oxide such as Li₁₊ₓMn₂₋ₓO₄ (x = 0~0.33), LiMnO₃, LiMn₂O₃, LiMnO₂; lithium copper oxide (Li₂CuO₂); vanadium oxide such as LiV₃O₅, LiV₃O₄, V₂O₅, Cu₂V₂O₇; Ni site lithium nickel oxide represented by formula LiNi₁₋ₓMₓO₂ (M = Co, Mn, Al, Cu, Fe, Mg, B or Ga, x = 0.01~0.3); lithium manganese composite oxide represented by formula LiMn₂₋ₓMₓO₂ (M = Co, Ni, Fe, Cr, Zn or Ta, x = 0.01~0.1) or Li₂Mn₃MO₅ (M = Fe, Co, Ni, Cu or Zn); LiMn₂O₄ with partial substitution of alkali earth metal ion for Li; disulfide compounds and Fe₂(MoO₄)₃, but is not limited thereto.

Non-limiting examples of the negative electrode active material may include any negative electrode active material commonly used the negative electrode of the electrochemical device, and in particular, may include lithium adsorption materials such as lithium metal or lithium alloy, carbon, petroleum coke, activated carbon, graphite or other carbons.

Non-limiting examples of the positive electrode current collector may include foils made of aluminum, nickel or a combination thereof, and non-limiting examples of the negative electrode current collector may include foils made of copper, gold, nickel or copper alloy or a combination thereof.

In an embodiment of the present disclosure, a conductive material used in the negative electrode and the positive electrode may be, in general, added in an amount of 1 weight% to 30 weight% based on the total weight of the active material layer, respectively. The conductive material is not limited to any particular type when the material has conductivity while not causing a chemical change to the corresponding battery, and may include conductive materials, for example, graphite such as natural graphite or artificial graphite; carbon black such as acetylene black, ketjen black, channel black, furnace black, lamp black and thermal black; conductive fibers such as carbon fibers or metal fibers; fluorocarbon; metal powder such as aluminum powder and nickel powder; conductive whiskers such as oxide zinc and potassium titanate; conductive metal oxide such as titanium oxide; polyphenylene derivatives.

In an embodiment of the present disclosure, the binder used in each of the negative electrode and the positive electrode assists in binding the active material and the conductive material and binding the active material and the current collector, and in general, may be added in an amount of 1 weight% to 30 weight% based on the total weight of the active material layer, respectively. Examples of the binder may include polyvinylidene fluoride (PVdF), polyacrylic acid (PAA), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, fluorine rubber, and various types of copolymers.

In an embodiment of the present disclosure, the electrochemical device comprises an electrolyte solution, and the electrolyte solution may comprise an organic solvent and a lithium salt. Additionally, the electrolyte solution may comprise an organic solid electrolyte or an inorganic solid electrolyte.

For example, the organic solvent may include aprotic organic solvents such as N-methyl-2-pyrrolidinone, ethylene carbonate, propylene carbonate, butylene carbonate, dimethyl carbonate, diethyl carbonate, gamma butyrolactone, 1,2-dimethoxy ethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

The lithium salt is an material that is apt to dissolve in the organic solvent, and may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloro borane lithium, lower aliphatic carboxylic acid lithium, lithium tetraphenyl borate, and imide.

Additionally, to improve the charging/discharging characteristics and flame retardancy, for example, pyridine, triethylphosphite, triethanolamine, cyclic ether, ethylene diamine, n-glyme, triamide hexaphosphate, nitrobenzene derivatives, sulfur, quinone imine dye, N-substituted oxazolidinone, N,N-substituted imidazolidine, ethylene glycol dialkyl ether, ammonium salts, pyrrole, 2-methoxy ethanol, and aluminum trichloride may be added to the electrolyte solution. In some cases, a halogen containing solvent such as carbon tetrachloride and trifluoroethylene may be added to give non-combustibility, and carbon dioxide gas may be added to improve high temperature storage characteristics.

For example, the organic solid electrolyte may comprise polyethylene derivatives, polyethylene oxide derivatives, polypropylene oxide derivatives, phosphoric acid ester polymer, poly agitation lysine, polyester sulfide, polyvinyl alcohol, polyvinylidene fluoride, and polymers containing ionic dissociation groups.

For example, the inorganic solid electrolyte may include nitrides, halides and sulfates of Li, for example, Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

The injection of the electrolyte solution may be performed in any suitable step of the battery manufacturing process according to a manufacturing process and required properties of a final product. That is, the injection of the electrolyte solution may be applied before battery assembly or in the final step of battery assembly.

According to a specific embodiment of the present disclosure, a process of applying the separator for an electrochemical device to the battery may include the commonly used winding process as well as a lamination or stacking and folding process of the separator and the electrode.

According to a specific embodiment of the present disclosure, the separator for an electrochemical device may be interposed between the positive electrode and the negative electrode of the electrochemical device, and may be interposed between adjacent cells or electrodes when constructing an electrode assembly by assembling a plurality of cells or electrodes. The electrode assembly may have a variety of structures, for example, simple stack type, jelly-roll type, stack-folding type, and lamination-stack type.

Hereinafter, the present disclosure will be described in detail through examples to help understanding of the present disclosure. However, the examples of the present disclosure may be modified in many other forms, and the scope of the present disclosure should not be construed as being limited to the following examples. The examples of the present disclosure are provided to fully explain the present disclosure to those having ordinary knowledge in the technical field to which the present disclosure pertains.

### Example 1

A first slurry was prepared by mixing water as a first solvent, boehmite particles (Nabaltec, Actilox200SM, D50=200nm) as first inorganic particles, and acrylic copolymer (Toyo ink, CSB-130) and carboxymethylcellulose (GL CHEM, SG-L02) as a first binder polymer at a weight ratio of 97:2:1. The solids content of the first slurry was 40%.

A polyolefin porous film (Senior, SW310H, thickness 9 µm, air permeation time: 93 sec/100 cc) was prepared as a substrate, and the first slurry was coated on one surface of the polyolefin porous film to manufacture a preliminary separator. The thickness of a first porous coating layer obtained by coating and drying the first slurry was 2.5 µm.

Subsequently, a second slurry was prepared by mixing NMP as a second solvent, alumina particles (Sumitomo, AES11, D50=600nm) as second inorganic particles, and PVdF-HFP (Solvay, Solef21510) and PVdF-TFE (Daikin, VT475) as a second binder polymer, such that a weight ratio of the second inorganic particles, the PVdF-HFP and the PVdF-TFE was 65:30:5. The solids content of the second slurry was 25%.

Subsequently, PVdF-HFP (Solvay, Solef21510, weight average molecular weight 290,000) as a third binder polymer was dissolved in NMP as a third solvent to prepare a coating solution having the solids content of 2%. The radius of gyration of the third binder polymer in the coating solution was 165 nm.

The second slurry was coated on one surface of the polyolefin porous polymer substrate of the prepared preliminary separator, and subsequently, the coating solution was coated on the surface of the first porous coating layer, followed by immersion in a coagulant solution in which water and NMP were maintained at a weight ratio of 6:4 to cause non-solvent induced phase separation. Subsequently, the manufacture of the separator was completed by washing with water a few times and drying.

The total thickness of the manufactured separator was 15.3 µm, and the air permeation time was 185 sec/100 cc when measured. In this instance, cross-sectional SEM analysis showed that the thickness of the second porous coating layer formed by coating and drying the second slurry is 3.2 µm, and the thickness of an electrode adhesion layer formed by coating and drying the coating solution is 0.6 µm.

### Example 2 (not according to the invention)

A preliminary separator was prepared in the same way as example 1, except that the first inorganic particles were changed to alumina particles (Sumitomo, AES11, D50=600nm) that are the same as the second slurry and the composition of the first slurry was adjusted to the weight ratio of 97.5:1.5:1.

In this instance, the thickness of the first porous coating layer coated with the first slurry was 2.5 µm.

The total thickness of the manufactured separator was 15.3 µm, and the air permeation time was 174 sec/100 cc when measured. In this instance, it was found through cross-sectional SEM analysis that the thickness of the second porous coating layer formed by coating and drying the second slurry is 3.2 µm, and the thickness of the electrode adhesion layer formed by coating and drying the coating solution is 0.6 µm.

### Example 3

A preliminary separator was prepared in the same way as example 1, except that the first inorganic particles were changed to fumed alumina (Evonik, Alu65, D50=20nm) and the composition of the first slurry was adjusted to the weight ratio of 95:3:2.

In this instance, the thickness of the first porous coating layer obtained by coating and drying the first slurry was 2.5 µm.

The total thickness of the manufactured separator was 15.2 µm, and the air permeation time was 193 sec/100 cc when measured. In this instance, it was found through cross-sectional SEM analysis that the thickness of the second porous coating layer formed by coating and drying the second slurry is 3.2 µm, and the thickness of the electrode adhesion layer formed by coating and drying the coating solution is 0.5 µm.

### Example 4

A preliminary separator was prepared in the same way as example 1, except that the first inorganic particles were changed to a mixture of fumed alumina (Evonik, Alu65, D50=20nm) and alumina particles (Sumitomo, AES11, D50=600nm) at a weight ratio of 15:85.

In this instance, the thickness of the first porous coating layer coated with the first slurry was 2.5 µm.

The total thickness of the manufactured separator was 15.1 µm, and the air permeation time was 183 sec/100 cc when measured. In this instance, it was found through cross-sectional SEM analysis that the thickness of the second porous coating layer formed by coating and drying the second slurry is 3.1 µm, and the thickness of the electrode adhesion layer formed by coating and drying the coating solution is 0.5 µm.

### Example 5

A preliminary separator was prepared in the same way as example 3, except that the second inorganic particles were changed to boehmite particles (Nabaltec, Actilox200SM, D50=200 nm).

In this instance, the thickness of the first porous coating layer coated with the first slurry was 2.5 µm.

The total thickness of the manufactured separator was 15.0 µm, and the air permeation time was 203 sec/100 cc when measured. In this instance, it was found through cross-sectional SEM analysis that the thickness of the second porous coating layer formed by coating and drying the second slurry is 3.0 µm, and the thickness of the electrode adhesion layer formed by coating and drying the coating solution is 0.5 µm.

### Example 6

A preliminary separator was prepared in the same way as example 3, except that the second inorganic particles were changed to a mixture of boehmite particles (Nabaltec, Actilox200SM, D50=200 nm) and fumed alumina (Evonik, Alu65, D50=20 nm) at a weight ratio of 1:1 (total D50 of the second inorganic particles=110 nm). In this instance, the thickness of the first porous coating layer coated with the first slurry was 2.5 µm.

The total thickness of the manufactured separator was 15.1 µm, and the air permeation time was 211 sec/100 cc when measured. In this instance, it was found through cross-sectional SEM analysis that the thickness of the second porous coating layer formed by coating and drying the second slurry is 3.1 µm, and the thickness of the electrode adhesion layer formed by coating and drying the coating solution is 0.5 µm.

### Example 7

A first slurry was prepared by mixing water as a first solvent, a mixture of boehmite particles (Nabaltec, Actilox200SM, D50=200 nm) and alumina particles (Evonik, Alu65, D50=20 nm) at a weight ratio of 50:50 as first inorganic particles, and acrylic copolymer (Toyo ink, CSB-130) and carboxymethylcellulose (GL CHEM, SG-L02) as a first binder polymer, such that a weight ratio of the first inorganic particles, the acrylic copolymer and the carboxymethylcellulose was 97:2:1. The solids content of the first slurry was 40%.

A polyolefin porous film (Senior, SW310H, thickness 9 µm, the air permeation time 93 sec/100 cc) was prepared as a substrate and the first slurry was coated on one surface of the polyolefin porous film to manufacture a preliminary separator. The thickness of a first porous coating layer obtained by coating and drying the first slurry was 2.5 µm.

Subsequently, a second slurry was prepared by mixing N-methyl-2-pyrrolidone (NMP) as a second solvent, alumina particles (Sumitomo, AES11, D50=600nm) as second inorganic particles, PVdF-HFP (Solvay, Solef21510) and PVdF-TFE(Daikin, VT475) as a second binder polymer, such that a weight ratio of the second inorganic particles, the PVdF-HFP and the PVdF-TFE was 65:30:5. The solids content of the second slurry was 25%.

The second slurry was coated on one surface of the polyolefin porous polymer substrate of the prepared preliminary separator, followed by immersion in a coagulant solution in which water and NMP were maintained at a ratio of 6:4 to cause non-solvent induced phase separation. Subsequently, a second porous coating layer was formed by washing with water a few times and drying. In this instance, as a result of cross-sectional SEM analysis of the thickness of the second porous coating layer formed by coating and drying of the second slurry, it was 3.2 µm.

Subsequently, PVdF-HFP (Solvay, Solef21510, weight average molecular weight 290.000) as a third binder polymer was dissolved in NMP as a third solvent to prepare a coating solution having the solids content of 2%. The radius of gyration of the third binder polymer in the coating solution was 165 nm. The coating solution was coated on the surface of the first porous coating layer, followed immersion in a coagulant solution such that water and NMP were maintained at a weight ratio of 6:4 by to cause non-solvent induced phase separation. Subsequently, the manufacture of the separator was completed by washing with water a few times and drying.

The total thickness of the manufactured separator was 15.3 µm, and the air permeation time was 185 sec/100 cc when measured. As a result of cross-sectional SEM analysis of the thickness of an electrode adhesion layer formed by coating and drying of the coating solution, it was 0.6 µm.

### Comparative example 1

The first slurry prepared in example 1 was coated on both surfaces of a polyolefin substrate and dried to prepare a preliminary separator, and the coating solution prepared in example 1 was coated on both surfaces of the preliminary separator, followed by non-solvent induced phase separation, to manufacture a separator.

The total thickness of the first porous coating layer formed in the manufactured preliminary separator was 4.9 µm.

The total thickness of the manufactured separator was 14.6 µm, and the air permeation time was 213 sec/100 cc when measured. In this instance, it was found through cross-sectional SEM analysis that the thickness of an electrode adhesion layer formed by coating and drying of the coating solution is 0.4 µm, 0.3 µm respectively.

### Comparative example 2

The second slurry prepared in example 1 was coated on both surfaces of a polyolefin substrate, followed by non-solvent induced phase separation, to manufacture a separator.

The total thickness of the manufactured separator was 15.0 µm, and the air permeation time was as 171 sec/100 cc when measured. In this instance, the thickness of the porous coating layer through cross-sectional SEM analysis was 3.1 µm, 2.9 µm, respectively.

### Test example 1: Measurement of average pore size and porosity of first

### porous coating layer

The average pore size and porosity of the first porous coating layer of the separator manufactured in each of examples 2, 3 and 7 was measured and the results are shown in the following table 1.

The average pore size of the first porous coating layer was measured using PMI iPore-1500AEX by capillary flow porometry.

The porosity of the first porous coating layer was measured by subtracting the volume converted from the weight and density of each component of the first porous coating layer from the volume calculated using the thickness, width and height of the first porous coating layer.

**[Table 1]**

| | Example 2 | Example 3 | Example 7 |
|---|---|---|---|
| Average particle size (D50) (nm) of first inorganic particles | 600 | 20 | 110 |
| Average particle size (nm) of first porous coating layer | 146 | 21 | 89 |
| Porosity (%) of first porous coating layer | 58 | 52 | 56 |

### Test example 2: Observation of surface of separator

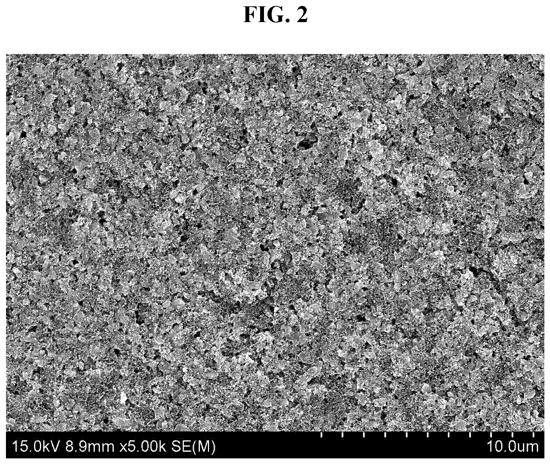

A SEM image of the thin film of the first porous coating layer of the separator manufactured in example 4 is shown in FIG. 2. The SEM image of the thin film of the first porous coating layer shows the surface of the first porous coating layer before the electrode adhesion layer is formed.

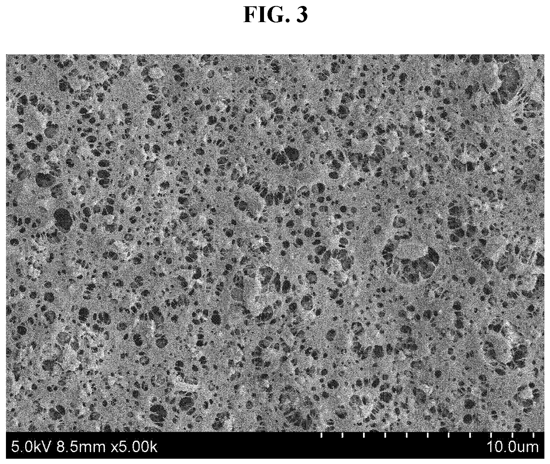

A SEM image of the thin film of the second porous coating layer of the separator manufactured in example 4 is shown in FIG. 3.

It can be seen that the first porous coating layer has an interstitial volume structure in the densely packed inorganic particles, and the second porous coating layer has a node-thread structure comprising a node including inorganic particles and binder polymer that coats a part of the surface of the inorganic particles and filaments formed from the binder polymer of the node in the shape of thread.

### Test example 3: Measurement of properties of separator

The weight average molecular weight of the third binder polymer and the radius of gyration of the third binder polymer of the separator manufactured in each of examples 1 to 7 and comparative example 1 were measured and the results are shown in the following table 2.

Additionally, the thermal shrinkage and adhesion to electrode of the separator of each of examples 1 to 7 and comparative examples 1 to 2 were measured by the following method and the results are shown in the following table 2.

### (1) Measurement of weight average molecular weight of third binder polymer

The weight average molecular weight of the third binder polymer was measured by gel permeation chromatography (GPC) (PL GPC220, Agilent Technologies) in the following condition.
- Column: PL Olexis (Polymer Laboratories)
- Solvent: TCB (Trichlorobenzene)
- Flow rate: 1.0 ml/min
- Specimen concentration: 1.0 mg/ml
- Injection amount: 200 µℓ
- Column temperature: 160°C
- Detector: Agilent High Temperature RI detector
- Standard: Polystyrene (fitted to a third degree polynominal)

### (2) Measurement of radius of gyration of third binder polymer

The radius of gyration of the third binder polymer was measured at room temperature by a dynamic light scattering method using Otsuka DLS-8000 by stirring to fully dissolve the third binder polymer used in each of examples 1 to 7 and comparative example 1 in the solvent used in each of examples 1 to 7 and comparative example 1 in the condition of 2% solids content at room temperature for 1 hour, and diluting with an addition to the same solvent as the solvent so that the concentration was 1/100.

### (3) Measurement of thermal shrinkage of separator

The thermal shrinkage of the separator was calculated by tailoring the separator manufactured in each of examples 1 to 7 and comparative examples 1 to 2 into a square shape of MD 10 cm x TD 10 cm, keeping it in a constant temperature oven that is maintained at 150°C for 30 minutes, and measuring a changed length in Machine Direction and Transverse Direction: 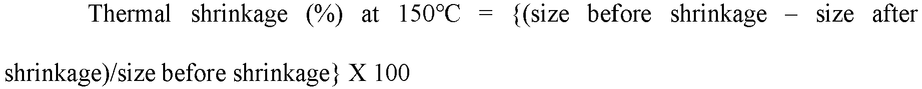 Thermal shrinkage (%) at 150°C = {(size before shrinkage - size after shrinkage)/size before shrinkage} X 100

### (4) Measurement of adhesion strength with electrode of separator

Two separators manufactured in each of examples 1 to 7 and comparative examples 1 to 2 were stacked such that the second porous coating layers face each other or the electrode adhesion layers face each other, and inserted between 100 *µ*m PET films and allowed to pass through roll laminators of 100°C to adhere them. In this instance, heating was performed at the speed of the roll laminators of 0.3 m/min for 30 seconds, and the pressure at that time was 2 kgf/cm².

After the ends of the two adhered separators were mounted on UTM equipment (LLOYD Instrument LF Plus), a force necessary to separate the adhered separators was measured by applying a force in two directions at the measurement speed of 300 mm/min.

When measuring the separator manufactured comparative example 1, the electrode adhesion layers faced each other, and when measuring comparative example 2, the second porous coating layers faced each other.

**[Table 2]**

| | | Exam ple 1 | Exam ple 2 | Exam ple 3 | Exam ple 4 | Exam ple 5 | Exam ple 6 | Exam ple 7 | Com. ex. 1 | Com. ex. 2 |
|---|---|---|---|---|---|---|---|---|---|---|
| Average particle size of first inorganic particles (D50)(nm) | | 200 | 600 | 20 | 513 | 20 | 20 | 110 | 200 | - |
| Average particle size of second inorganic particles (D50)(nm) | | 600 | 600 | 600 | 600 | 200 | 110 | 600 | - | 600 |
| Weight average molecular weight of third binder polymer | | 290,0 00 | 290,0 00 | 290,0 00 | 290,0 00 | 290,0 00 | 290,0 00 | 290,0 00 | 290,000 | - |
| Radius of gyration of third binder polymer(nm) | | 165 | 165 | 165 | 165 | 165 | 165 | 165 | 165 | - |
| Thermal shrinkage (%) | MD | 3.9 | 4.8 | 2.8 | 3 | 2.6 | 2.4 | 2.7 | 4.7 | 58.8 |
| | TD | 5.5 | 6.4 | 4.5 | 4.9 | 4.2 | 3.9 | 4.4 | 6.2 | 59.3 |
| Adhesion strength with electrode (gf/25mm) | Electro de adhesio n layer | 108.1 | 95.8 | 112.3 | 110.1 | 115.2 | 114.8 | 110.5 | 63.3/93.2 (electrode adhesion layer is not properly formed) | - |
| | Second porous coating layer | 104.7 | 103.2 | 105.5 | 104.9 | 90.6 | 78.3 | 110.1 | - | 121.2/1 19.4 |

As can be seen from Table 2, in the case of examples 1 to 7, it can be seen that both thermal shrinkage and adhesion to electrode are very good. Additionally, it can be seen that examples 1 to 5 and 7 using the second inorganic particles having the particle size of 200 nm or more exhibit better adhesion to electrode than example 6 using the second inorganic particles having the average particle size smaller than 200 nm. Example 2 is not according to the invention.

In contrast, in the case of comparative example 1, it is difficult to ensure the adhesive property due to permeation of the electrode adhesion layer on the upper surface of the first porous coating layer formed on both surfaces of the polyolefin polymer substrate into the pores of the first porous coating layer and the pores of the polyolefin polymer substrate, and there is a difference in adhesive property between the both surfaces of the separator.

Additionally, in the case of comparative example 2, the porous coating layer does not have an interstitial volume structure, which makes it difficult to ensure thermal shrinkage.

## Claims

1. A separator for an electrochemical device, comprising:
a porous polymer substrate;
a first porous coating layer disposed on one surface of the porous polymer substrate, and comprising first inorganic particles, and a first binder polymer disposed on all or part of surface of the first inorganic particles to connect and hold the first inorganic particles together, wherein interstitial volume is formed between the first inorganic particles in substantial contact with each other and is a void space which forms pores;
a second porous coating layer disposed on the other surface of the porous polymer substrate, and comprising a plurality of nodes comprising second inorganic particles and a second binder polymer coating at least part of surface of the second inorganic particles; and a node connected part comprising at least one filament formed from the second binder polymer of the node in a thread shape, the filament extending from the node and connecting another node, wherein the node connected part has a 3-dimensional network structure in which the plurality of filaments derived from the second binder polymer cross each other; and
an electrode adhesion layer disposed on an upper surface of the first porous coating layer, and comprising a third binder polymer,
wherein an average particle size of the first inorganic particles is smaller than an average particle size of the second inorganic particles, determined as described in the description.

2. The separator for an electrochemical device according to claim 1, wherein the average particle size of the first inorganic particles is 0.01 to 0.99 times smaller than the average particle size of the second inorganic particles.

3. The separator for an electrochemical device according to claim 1, wherein the average particle size of the first inorganic particles is 10 nm to 800 nm, measured as described in the description.

4. The separator for an electrochemical device according to claim 1, wherein the average particle size of the second inorganic particles is 200 nm to 1000 nm, measured as described in the description.

5. The separator for an electrochemical device according to claim 1, wherein an average pore size of the first porous coating layer is 40 nm to 150 nm, measured as described in the description.

6. The separator for an electrochemical device according to claim 1, wherein the third binder polymer has a weight average molecular weight of 250,000 to 500,000 measured by gel permeation chromatography.

7. The separator for an electrochemical device according to claim 1, wherein the third binder polymer has a radius of gyration of 150 nm to 500 nm, measured as described in the description.

8. The separator for an electrochemical device according to claim 1, wherein the first binder polymer comprises at least one of styrene butadiene rubber, acrylic polymer, carboxymethylcellulose or polyvinylalcohol.

9. The separator for an electrochemical device according to claim 1, wherein the second binder polymer comprises at least one of poly(vinylidene fluoride-co-hexafluoropropylene), poly(vinylidene fluoride-co-trichloroethylene), poly(vinylidene fluoride-co-tetrafluoroethylene) or poly(vinylidene fluoride-co-trifluoroethylene).

10. The separator for an electrochemical device according to claim 1, wherein the third binder polymer comprises at least one of poly(vinylidene fluoride-co-hexafluoropropylene), poly(vinylidene fluoride-co-trichloroethylene), poly(vinylidene fluoride-co-tetrafluoroethylene) or poly(vinylidene fluoride-co-trifluoroethylene).

11. An electrochemical device such as a secondary battery comprising a positive electrode, a negative electrode and a separator interposed between the positive electrode and the negative electrode, wherein the separator is the separator for an electrochemical device according to any one of claims 1 to 10.

12. The electrochemical device according to claim 11, wherein the electrochemical device is a lithium secondary battery.

## Patentansprüche

1. Separator für eine elektrochemische Vorrichtung, umfassend:
ein poröses Polymersubstrat;
eine erste poröse Beschichtungsschicht, die auf einer Oberfläche des porösen Polymersubstrats angeordnet ist und erste anorganische Partikel und ein erstes Bindemittelpolymer umfasst, das auf der gesamten oder einem Teil der Oberfläche der ersten anorganischen Partikel angeordnet ist, um die ersten anorganischen Partikel miteinander zu verbinden und zu halten, wobei zwischen den ersten anorganischen Partikeln, die in wesentlichem Kontakt miteinander stehen, ein interstitielles Volumen gebildet ist und ein Hohlraum ist, der Poren bildet;
eine zweite poröse Beschichtungsschicht, die auf der anderen Oberfläche des porösen Polymersubstrats angeordnet ist, und eine Vielzahl von Knoten umfasst, die zweite anorganische Partikel und ein zweites Bindemittelpolymer umfassen, das mindestens einen Teil der Oberfläche der zweiten anorganischen Partikel beschichtet; und einen knotenverbundenen Teil, der mindestens ein Filament umfasst, das aus dem zweiten Bindemittelpolymer des Knotens in einer fadenförmigen Form gebildet ist, wobei sich das Filament von dem Knoten aus erstreckt und einen anderen Knoten verbindet, wobei der knotenverbundene Teil eine 3-dimensionale Netzwerkstruktur aufweist, in der sich die Vielzahl von Filamenten, die von dem zweiten Bindemittelpolymer abgeleitet sind, kreuzen; und
eine Elektrodenhaftschicht, die auf einer oberen Oberfläche der ersten porösen Beschichtungsschicht angeordnet ist und ein drittes Bindemittelpolymer umfasst,
wobei eine durchschnittliche Partikelgröße der ersten anorganischen Partikel kleiner ist als eine durchschnittliche Partikelgröße der zweiten anorganischen Partikel, bestimmt wie in der Beschreibung beschrieben.

2. Separator für eine elektrochemische Vorrichtung nach Anspruch 1, wobei die durchschnittliche Partikelgröße der ersten anorganischen Partikel 0,01 bis 0,99 Mal kleiner ist als die durchschnittliche Partikelgröße der zweiten anorganischen Partikel.

3. Separator für eine elektrochemische Vorrichtung nach Anspruch 1, wobei die durchschnittliche Partikelgröße der ersten anorganischen Partikel 10 nm bis 800 nm beträgt, gemessen wie in der Beschreibung beschrieben.

4. Separator für eine elektrochemische Vorrichtung nach Anspruch 1, wobei die durchschnittliche Partikelgröße der zweiten anorganischen Partikel 200 nm bis 1000 nm beträgt, gemessen wie in der Beschreibung beschrieben.

5. Separator für eine elektrochemische Vorrichtung nach Anspruch 1, wobei eine durchschnittliche Porengröße der ersten porösen Beschichtungsschicht 40 nm bis 150 nm beträgt, gemessen wie in der Beschreibung beschrieben.

6. Separator für eine elektrochemische Vorrichtung nach Anspruch 1, wobei das dritte Bindemittelpolymer ein gewichtsmittleres Molekulargewicht von 250.000 bis 500.000 aufweist, gemessen durch Gelpermeationschromatographie.

7. Separator für eine elektrochemische Vorrichtung nach Anspruch 1, wobei das dritte Bindemittelpolymer einen Trägheitsradius von 150 nm bis 500 nm aufweist, gemessen wie in der Beschreibung beschrieben.

8. Separator für eine elektrochemische Vorrichtung nach Anspruch 1, wobei das erste Bindemittelpolymer mindestens eines von Styrol-Butadien-Kautschuk, Acrylpolymer, Carboxymethylcellulose oder Polyvinylalkohol umfasst.

9. Separator für eine elektrochemische Vorrichtung nach Anspruch 1, wobei das zweite Bindemittelpolymer mindestens eines von Poly(vinylidenfluorid-co-hexafluorpropylen), Poly(vinylidenfluorid-co-trichlorethylen), Poly(vinylidenfluorid-co-tetrafluorethylen) oder Poly(vinylidenfluorid-co-trifluorethylen) umfasst.

10. Separator für eine elektrochemische Vorrichtung nach Anspruch 1, wobei das dritte Bindemittelpolymer mindestens eines von Poly(vinylidenfluorid-co-hexafluorpropylen), Poly(vinylidenfluorid-co-trichlorethylen), Poly(vinylidenfluorid-co-tetrafluorethylen) oder Poly(vinylidenfluorid-co-trifluorethylen) umfasst.

11. Elektrochemische Vorrichtung, wie eine Sekundärbatterie, die eine positive Elektrode, eine negative Elektrode und einen zwischen der positiven Elektrode und der negativen Elektrode eingefügten Separator umfasst, wobei der Separator der Separator für eine elektrochemische Vorrichtung nach einem der Ansprüche 1 bis 10 ist.

12. Elektrochemische Vorrichtung nach Anspruch 11, wobei die elektrochemische Vorrichtung eine Lithium-Sekundärbatterie ist.

## Revendications

1. Séparateur pour un dispositif électrochimique, comprenant :
un substrat polymère poreux ;
une première couche de revêtement poreuse disposée sur une surface du substrat polymère poreux, et comprenant des premières particules inorganiques, et un premier polymère liant disposé sur la totalité ou une partie de la surface des premières particules inorganiques pour relier et maintenir ensemble les premières particules inorganiques, dans laquelle un volume interstitiel est formé entre les premières particules inorganiques substantiellement en contact les unes avec les autres et est un espace vide qui forme des pores ;
une deuxième couche de revêtement poreuse disposée sur l'autre surface du substrat polymère poreux, et comprenant une pluralité de nœuds comprenant des secondes particules inorganiques et un deuxième polymère liant revêtant au moins une partie de la surface des secondes particules inorganiques ; et une partie de liaison entre nœuds comprenant au moins un filament formé à partir du deuxième polymère liant du nœud sous une forme de fil, le filament s'étendant depuis le nœud et reliant un autre nœud, dans laquelle la partie de liaison entre nœuds a une structure de réseau tridimensionnelle dans laquelle la pluralité de filaments dérivés du deuxième polymère liant se croisent les uns les autres ; et
une couche adhésive d'électrode disposée sur une surface supérieure de la première couche de revêtement poreuse, et comprenant un troisième polymère liant,
dans laquelle une taille moyenne des particules des premières particules inorganiques est plus petite qu'une taille moyenne des particules des secondes particules inorganiques, déterminée comme décrit dans la description.

2. Séparateur pour un dispositif électrochimique selon la revendication 1, dans lequel la taille moyenne des particules des premières particules inorganiques est plus petite de 0,01 à 0,99 fois que la taille moyenne des particules des secondes particules inorganiques.

3. Séparateur pour un dispositif électrochimique selon la revendication 1, dans lequel la taille moyenne des particules des premières particules inorganiques est de 10 nm à 800 nm, mesurée comme décrit dans la description.

4. Séparateur pour un dispositif électrochimique selon la revendication 1, dans lequel la taille moyenne des particules des secondes particules inorganiques est de 200 nm à 1000 nm, mesurée comme décrit dans la description.

5. Séparateur pour un dispositif électrochimique selon la revendication 1, dans lequel une taille moyenne des pores de la première couche de revêtement poreuse est de 40 nm à 150 nm, mesurée comme décrit dans la description.

6. Séparateur pour un dispositif électrochimique selon la revendication 1, dans lequel le troisième polymère liant a une masse moléculaire moyenne en poids de 250 000 à 500 000 mesurée par chromatographie par perméation de gel.

7. Séparateur pour un dispositif électrochimique selon la revendication 1, dans lequel le troisième polymère liant a un rayon de giration de 150 nm à 500 nm, mesuré comme décrit dans la description.

8. Séparateur pour un dispositif électrochimique selon la revendication 1, dans lequel le premier polymère liant comprend au moins l'un de caoutchouc styrène-butadiène, polymère acrylique, carboxyméthylcellulose ou alcool polyvinylique.

9. Séparateur pour un dispositif électrochimique selon la revendication 1, dans lequel le deuxième polymère liant comprend au moins l'un de poly(fluorure de vinylidène-co-hexafluoropropylène), poly(fluorure de vinylidène-co-trichloroéthylène), poly(fluorure de vinylidène-co-tétrafluoroéthylène) ou poly(fluorure de vinylidène-co-trifluoroéthylène).

10. Séparateur pour un dispositif électrochimique selon la revendication 1, dans lequel le troisième polymère liant comprend au moins l'un de poly(fluorure de vinylidène-co-hexafluoropropylène), poly(fluorure de vinylidène-co-trichloroéthylène), poly(fluorure de vinylidène-co-tétrafluoroéthylène) ou poly(fluorure de vinylidène-co-trifluoroéthylène).

11. Dispositif électrochimique tel qu'une batterie secondaire comprenant une électrode positive, une électrode négative et un séparateur intercalé entre l'électrode positive et l'électrode négative, dans lequel le séparateur est le séparateur pour dispositif électrochimique selon l'une quelconque des revendications 1 à 10.

12. Dispositif électrochimique selon la revendication 11, dans lequel le dispositif électrochimique est une batterie secondaire au lithium.
